# FASCICULE DE BREVET EUROPEEN

(11) **EP 1 667 865 B1**
(45) Date de publication et mention de la délivrance du brevet: **10.01.2007**
(21) Numéro de dépôt: 04787281.7
(22) Date de dépôt: 01.09.2004
(51) Int. Cl.: B60K 13/04

(54) **SUSPENTE POUR LIGNE D ECHAPPEMENT, PROCEDE DE MONTAGE D'UNE SUSPENTE POUR LIGNE D ECHAPPEMENT**
ABGASLEITUNGSHALTER, VERFAHREN ZUR BEFESTIGUNG EINES ABGASLEITUNGSHALTERS
EXHAUST LINE HANGER, METHOD FOR MOUNTING AN EXHAUST LINE HANGER

(30) Priorité: 04.09.2003 FR 0310477
(43) Date de publication de la demande: 14.06.2006
(73) Titulaire: HUTCHINSON, 75008 Paris (FR)
(72) Inventeur: PORPE, Christophe, F-28630 Le Coudray (FR); BANCHEREAU, Michaël, F-28200 Châteaudun (FR)
(74) Mandataire: Burbaud, Eric
(86) Numéro de dépôt international: PCT/FR2004/002225
(87) Numéro de publication internationale: WO 2005/023576

(56) Documents cités:
- FR-A- 2 534 999
- US-A- 4 660 797
- US-A- 5 295 653
- US-A- 5 435 516
- US-B1- 6 379 048
- PATENT ABSTRACTS OF JAPAN vol. 1999, no. 12, 29 octobre 1999 (1999-10-29) -& JP 11 182602 A (MAZDA MOTOR CORP), 6 juillet 1999 (1999-07-06)
- PATENT ABSTRACTS OF JAPAN vol. 017, no. 298 (M-1425), 8 juin 1993 (1993-06-08) -& JP 05 018428 A (TOYODA GOSEI CO LTD), 26 janvier 1993 (1993-01-26)
- PATENT ABSTRACTS OF JAPAN vol. 1996, no. 09, 30 septembre 1996 (1996-09-30) -& JP 08 114251 A (HOSEI BRAKE KOGYO KK), 7 mai 1996 (1996-05-07)
- PATENT ABSTRACTS OF JAPAN vol. 1995, no. 01, 28 février 1995 (1995-02-28) -& JP 06 280555 A (TOKAI RUBBER IND LTD), 4 octobre 1994 (1994-10-04)
- PATENT ABSTRACTS OF JAPAN vol. 1999, no. 12, 29 octobre 1999 (1999-10-29) -& JP 11 190396 A (NISSAN MOTOR CO LTD), 13 juillet 1999 (1999-07-13)

## Description

La présente invention est relative aux suspentes pour ligne d'échappement de véhicule automobile.

Parmi les suspentes pour ligne d'échappement de véhicule automobile, l'invention concerne plus particulièrement celles destinées à lier entre eux une ligne d'échappement et la caisse d'un véhicule automobile, comprenant:
- un dispositif de liaison élastique qui s'étend perpendiculairement à un axe central et qui comporte une partie de liaison destinée à être reliée à un premier élément parmi la caisse et la ligne d'échappement et présentant un logement, ledit dispositif ayant une géométrie adaptée pour amortir des mouvements entre la ligne d'échappement et la caisse selon une direction principale de travail, et
- une armature rigide pour fixer le dispositif de liaison élastique à un second élément parmi la caisse et la ligne d'échappement, ladite armature rigide s'étendant perpendiculairement à l'axe central, et comportant un premier côté doté d'une ouverture et des deuxième et troisième côtés parallèles perpendiculaires audit premier côté et adjacents à ladite ouverture, chacun des deuxième et troisième côtés de l'armature présentant deux épaulements latéraux formant un U en coupe transversale ;
le dispositif de liaison élastique et l'armature rigide étant adaptés pour coopérer par emboîtement du dispositif de liaison élastique dans les deuxième et troisième côtés.

Une telle suspente est par exemple décrite dans le brevet US 4,660,797.

Le document JP 11-182602 décrit une suspente pour ligne d'échappement de véhicule automobile avec les caractéristiques du préambule de la revendication 1.

Certaines des suspentes sont conçues pour travailler en traction, d'autres en compression.

Un des problèmes posés par l'utilisation des suspentes pour ligne d'échappement est que sur une même ligne d'échappement, les positions relatives de la fixation de la suspente sur la caisse et de la fixation de la suspente sur la ligne d'échappement peuvent varier.

Par exemple, sur une même ligne, il pourra être nécessaire de disposer d'une première suspente telle que la fixation de la suspente sur la caisse sera réalisée au-dessus de la ligne d'échappement. Et il pourra être nécessaire également de disposer par exemple d'une seconde suspente telle que sa fixation sur la caisse sera réalisée cette fois au-dessous de la ligne d'échappement.

Des configurations autres sont parfois également nécessaires, par exemple des fixations pourront s'effectuer sur des plans non parallèles.

Si l'on souhaite que chaque dispositif de liaison élastique travaille essentiellement en compression dans tous les cas (par exemple dans le cas où le ou les meilleurs résultats d'une suspente sont fournis en compression), il faut au moins disposer de deux types différents de suspentes de l'art antérieur. Il en va de même dans le cas où l'on souhaite que chaque dispositif de liaison élastique travaille essentiellement en traction.

Ainsi autant de types de suspension que de configurations doivent être utilisés sur une même ligne d'échappement, ce qui signifie des contraintes en terme d'approvisionnement, de montage, et de coût.

La présente invention a notamment pour but de supprimer ces inconvénients.

Ce but est atteint au moyen d'une suspente pour ligne d'échappement de véhicule selon la revendication 1, et au moyen d'un procédé de montage d'une telle suspente selon la revendication 7.

A cet effet, selon un premier aspect, l'invention propose une suspente du type indiqué ci-dessus qui, outre les éléments déjà décrits est caractérisée par le fait que le dispositif de liaison élastique et l'armature rigide sont adaptés pour coopérer par emboîtement de l'un dans l'autre dans une position retenue parmi au moins deux positions relatives orientées l'une par rapport à l'autre dans un plan perpendiculaire à l'axe central et comprenant la direction principale de travail.

Grâce à ces dispositions, à partir des mêmes éléments constitutifs d'une suspente par exemple travaillant en compression, on pourra réaliser une suspente adaptée pour être utilisée en compression dans différentes configurations sur la ligne d'échappement. En effet, l'armature sera par exemple fixée dans un premier cas vers le haut, dans un second cas vers le bas, mais le dispositif de liaison élastique ayant été dans le second cas retourné dans l'armature par rapport au premier cas, la suspente travaillera dans les deux cas nominalement, en compression.

La suspente selon l'invention comporte éventuellement en outre l'une et/ou l'autre des dispositions suivantes:
- le dispositif de liaison élastique a une géométrie adaptée pour que la direction principale de travail corresponde à un travail en compression;
- le dispositif de liaison élastique a une géométrie adaptée pour que la direction principale de travail corresponde à un travail en traction ;
- l'armature présente un logement adapté pour que le dispositif de liaison élastique soit emboîté au moins en partie, dans le logement dans la position retenue ;
- l'armature s'étend sensiblement perpendiculairement à un axe central, et le dispositif de liaison élastique comporte une partie périphérique emboîtée dans le logement de l'armature et une partie de support reliant la partie de liaison à la partie périphérique, ladite partie de support étant adaptée pour travailler en compression lorsque la partie de liaison est sollicitée dans la direction principale de travail, perpendiculairement à l'axe central, orientée différemment par rapport à l'armature dans chacune desdites positions relatives ;
- la partie périphérique du dispositif de liaison élastique comporte une armature intermédiaire emboîtée dans ladite armature ;
- le dispositif de liaison élastique n'est pas adhérisé sur l'armature mais est fixé dans l'armature par simple emboîtement.

Suivant un deuxième aspect, l'invention propose un procédé de montage d'une suspente pour ligne d'échappement de véhicule automobile suivant le premier aspect de l'invention comprenant au moins l'étape consistant à faire coopérer l'armature et le dispositif de liaison élastique pour emboîtement de l'un dans l'autre, dans une position retenue parmi au moins deux positions relatives orientées l'une par rapport à l'autre dans un plan comprenant la première direction.

Le procédé selon l'invention comporte éventuellement en outre l'étape supplémentaire de fixation de l'armature à un élément choisi parmi la caisse et la ligne d'échappement, ce qui bloque le dispositif de liaison élastique dans l'armature.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente schématiquement en coupe un montage d'une ligne d'échappement sur une caisse de véhicule, comportant une suspente selon l'invention ;
- la figure 2 représente schématiquement en perspective le dispositif de liaison élastique de l'une des suspentes de la figure 1 ;
- la figure 3 représente schématiquement en perspective l'armature métallique de l'une des suspentes de la figure 1 ;
- la figure 4 représente quatre possibilités de montage de la suspente à partir du dispositif de liaison élastique de la figure 2 et de l'armature métallique de la figure 3
- les figures 5 et 6 représentent, de manière analogue à la figure 1, deux autres configurations d'implantation de suspentes selon l'invention dans un véhicule.

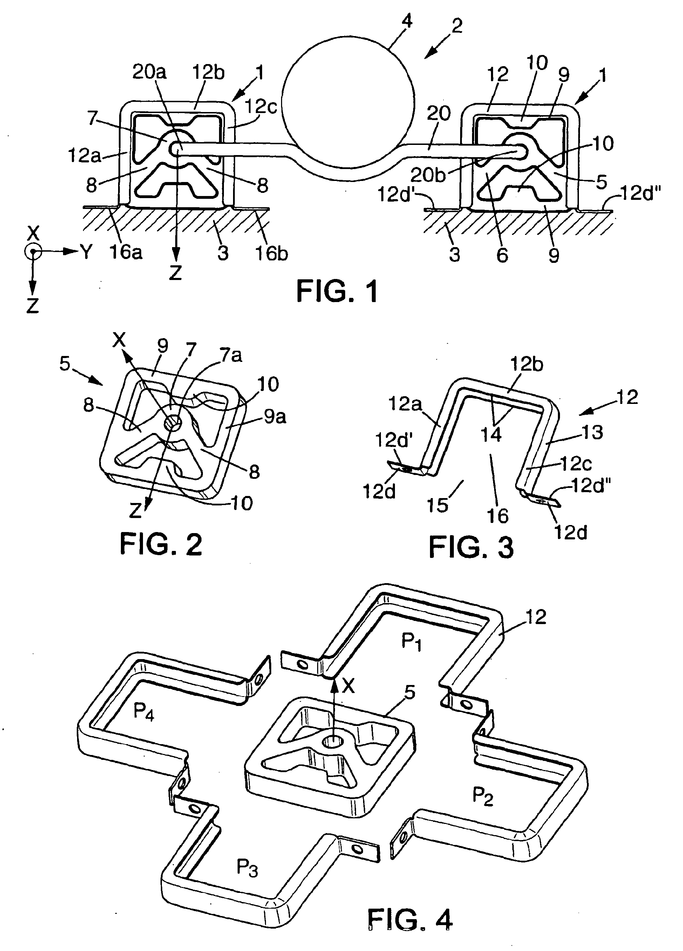

Sur la figure 1 sont représentées deux suspentes 1 similaires pour une ligne d'échappement 2 de véhicule. Chaque suspente 1 relie la ligne d'échappement 2 de véhicule automobile à la caisse 3 de ce véhicule. La ligne d'échappement 2 peut être constituée par un tuyau d'échappement 4, un pot d'échappement, etc. Un support 20 solidarisé avec la ligne d'échappement est relié par deux extrémités 20a et 20b aux suspentes 1.

La suspente 1 comprend un dispositif de liaison élastique, qui dans l'exemple représenté est constitué par un corps en élastomère moulé 5, mais qui dans le cas général pourrait comporter d'autres éléments que ce corps en élastomère. Le corps en élastomère 5 est relié au support 20.

Le corps en élastomère 5 est représenté en perspective sur la figure 2.

Il s'étend perpendiculairement à un axe central X. Il comprend une partie de liaison comportant un anneau central 7 relié à la tubulure 2 par exemple par engagement serré de la tubulure 2 dans un logement 7a décrit par l'anneau 7. Le corps en élastomère 5 comprend en outre une partie périphérique 9 comprenant une armature intermédiaire 9a. L'armature intermédiaire 9a présente une forme sensiblement carrée. Le corps en élastomère 5 comprend en outre une partie de support 8 comportant deux bras partant de l'anneau 7, symétriquement en biais de part et d'autre d'un axe Z passant par le centre de l'anneau et perpendiculaire à l'axe central X. La partie de support 8 du corps en élastomère 5 relie la partie de liaison 7 et la partie périphérique 9. Elle est adaptée pour travailler en compression lorsqu'elle est sollicitée selon l'axe Z en allant de l'anneau 7 vers l'extrémité opposé des bras.

La partie périphérique 9 comporte en outre, sur les deux côtés perpendiculaires à l'axe Z de l'armature intermédiaire 9a et en regard de l'anneau 7, des butées 10. Ces butées 10 sont destinées à limiter les déplacements de l'anneau 7 selon l'axe Z.

Chaque suspente 1 représentée en figure 1 comprend en outre une armature extérieure métallique 12 reliée à la caisse 3 du véhicule. Cette armature extérieure 12 est représentée en perspective sur la figure 3.

L'armature extérieure 12 s'étend perpendiculairement à l'axe central X. Trois des côtés de l'armature 12a, 12b, 12c décrivent trois côtés d'un carré et ménagent un logement 16 de forme sensiblement carrée. Chacun des côtés 12a, 12b, 12c forme un U en coupe transversale et comprend une âme 13 et deux épaulements latéraux ou ailes 14.

L'armature extérieure 12 présente une ouverture 15 sur son dernier côté 12d, entre les côtés 12a et 12c qui lui sont adjacents.

Le côté 12d comprend à chaque extrémité de l'ouverture 15 un rebord respectif 12d', 12d'' sous forme de languette qui s'étend perpendiculairement au côté adjacent de l'armature extérieure 12a, respectivement 12c, depuis ce côté et en s'éloignant de l'ouverture 15.

Comme représenté sur la figure 1, ces rebords 12d', 12d" sont appliqués sur la caisse et contribuent à relier la suspente 1 à la caisse 3 du véhicule, par exemple par l'intermédiaire de vis ou autre.

L'armature intermédiaire 9a de la partie périphérique 9 du corps en élastomère 5 est par ailleurs emboîtée dans le logement 16 décrit par les côtés 12a, 12b, 12c de l'armature extérieure 12. Le corps en élastomère 5 est ainsi maintenu serré entre l'armature extérieure 12 et la caisse du véhicule 3 à laquelle est reliée l'armature extérieure 12.

L'utilisation de la suspente 1 réalisée à partir de l'armature extérieure 12 et du corps en élastomère 5 et correspondant à la représentation de la figure 1 permet à cette suspente 1 de travailler en compression et de limiter ainsi les débattements de la ligne d'échappement 2 par rapport à la caisse 3. Ce mode de réalisation de la suspente 1 est particulièrement adapté au cas représenté, c'est-à-dire au cas où la caisse 3 du véhicule et le tuyau d'échappement 4 sont sensiblement parallèles et où les parties de la caisse sur lesquelles sont fixées les suspentes 1 sont situées au-dessous du tuyau d'échappement 4.

La suspente 1 dans la configuration telle que représentée en figure 1 n'est en revanche plus adaptée au cas où par exemple les parties de la caisse 3 du véhicule sur lesquelles sont fixées les suspentes 1 seraient situées au-dessus de la tubulure.

Toutefois le corps en élastomère 5 et l'armature extérieure 12 de la suspente 1 sont tels que le corps en élastomère 5 peut être emboîté dans le logement 16 ménagé dans l'armature extérieure 12 selon quatre positions différentes P1, P2, P3, P4, en tournant de 90° en 90° successivement dans le plan perpendiculaire à l'axe central X l'un des éléments parmi le corps en élastomère 5 et l'armature extérieure 12, par rapport à l'autre, comme représenté sur la figure 4.

La position relative du corps en élastomère 5 par rapport à l'armature extérieure 12 est définie lors du montage de la suspente 1. La suspente 1 travaillant nominalement en compression dans la direction Z, cette position relative est choisie en fonction des positions relatives des zones de fixation de la suspente sur la caisse du véhicule 3 d'une part, et sur le support 20 d'autre part. Elle est choisie de façon à ce que la direction Z du corps en élastomère 5, une fois emboîté dans l'armature extérieure 12 reliée à la caisse, corresponde au mieux à la direction des principaux déplacements qui vont être subis par la suspente et qui vont être provoqués par les débattements entre la caisse 3 du véhicule et la ligne d'échappement 2.

Une fois la position relative choisie, on engage le corps en élastomère 5 dans l'armature extérieure 12 dans cette position. Suivant les modes de réalisation, le corps en élastomère 5 peut en supplément être adhérisé à l'armature extérieure 12. Puis on fixe l'armature extérieure 5 sur la caisse 3, ce qui bloque le corps en élastomère 5 dans l'armature extérieure 12.

Ainsi la position relative P1 de la figure 4 correspond au mode de réalisation des suspentes 1 représentées en figure 1.

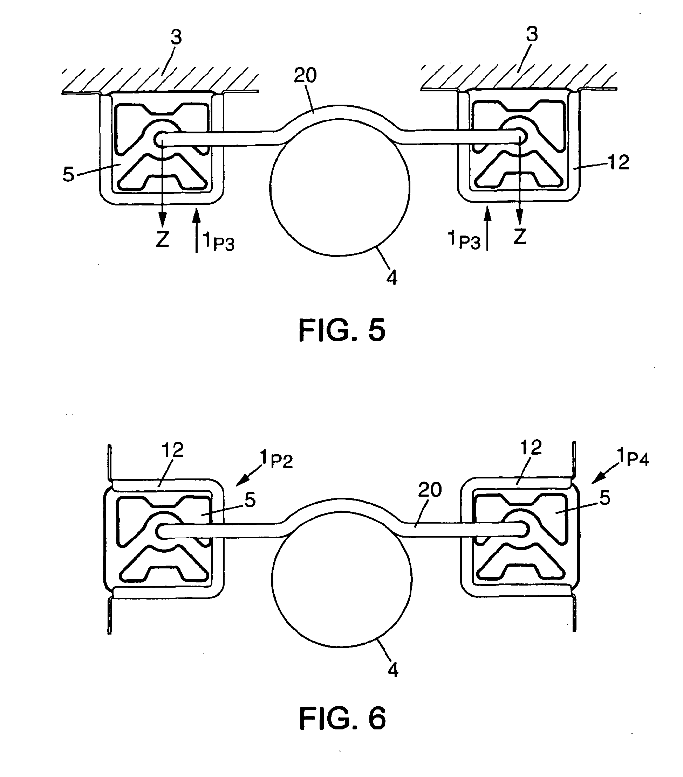

La position relative P3 de la figure 4 correspond au mode de réalisation d'une suspente 1_{P3} selon l'invention représentée en figure 5. Dans ce mode de réalisation, la zone de fixation de la suspente 1_{P3} sur la caisse 3 se situe au-dessus de la zone de fixation de la suspente 1_{P2} au support 20.

La position relative P2, respectivement P4, de la figure 4 correspond au mode de réalisation d'une suspente 1_{P2}, respectivement 1_{P4}, selon l'invention représentée en figure 6. Dans ces deux modes de réalisation de la suspente, la zone de fixation de la suspente 1_{P2}, 1_{P4} sur la caisse 3 se situe au même niveau et à gauche, respectivement à droite, de la zone de fixation de la suspente 1_{P2} sur la ligne d'échappement.

Ainsi l'invention propose une suspente permettant d'être utilisée sur toute la ligne d'échappement d'un véhicule, en s'adaptant aux différents besoins en chaque point où une suspente est nécessaire. La réalisation d'une telle suspente et de ses différentes configurations est très aisé et d'un coût très modéré. Dans les cas où l'élastomère est simplement monté serré dans l'armature sans adhésion, la suspente est aisément recyclable.

Le réglage des débattements maximum se fait par la dimension de l'armature extérieure.

Il est en outre possible d'avoir sur une même ligne d'échappement plusieurs suspentes avec une même armature métallique et un corps en élastomère réalisé dans différents élastomères.

Dans un autre mode de réalisation, la suspente ne sera pas de forme carrée, mais par exemple rectangulaire ou octogonale ...

Dans un autre mode de réalisation, par exemple, l'assemblage du corps en élastomère et de l'armature pourra se faire non par emboîtement du corps en élastomère dans l'armature extérieure, mais par exemple par emboîtement de l'armature dans le corps en élastomère, là encore les positions relatives de ces deux éléments étant déterminés en fonction de la configuration d'implantation dans le véhicule.

## Revendications

1. Suspente (1) pour ligne d'échappement de véhicule automobile pour lier entre eux une ligne d'échappement (2) et la caisse (3) d'un véhicule automobile, comprenant:
- un dispositif de liaison élastique (5) qui s'étend perpendiculairement à un axe central (X) et qui comporte une partie de liaison (7) destinée à être reliée à un premier élément parmi la caisse et la ligne d'échappement et présentant un logement (7a), ledit dispositif ayant une géométrie adaptée pour amortir des mouvements entre la ligne d'échappement et la caisse selon une direction principale de travail (Z), et
- une armature rigide (12) pour fixer le dispositif de liaison élastique à un second élément parmi la caisse et la ligne d'échappement, ladite armature rigide s'étendant perpendiculairement à l'axe central (X), et comportant un premier côté (12d) doté d'une ouverture (15) et des deuxième et troisième côtés parallèles (12a,12c) perpendiculaires audit premier côté et adjacents à ladite ouverture,
le dispositif de liaison élastique et l'armature rigide étant adaptés pour coopérer par emboîtement de l'un dans l'autre dans une position retenue parmi au moins deux positions relatives (P1,P2,P3,P4) orientées l'une par rapport à l'autre dans un plan (Y, Z) perpendiculaire à l'axe central (X) et comprenant la direction principale de travail (Z), ladite suspente étant **caractérisée par le fait que** chacun des deuxième et troisième côtés (12a,12c) de l'armature (12) présentent deux épaulements latéraux (14) formant un U en coupe transversale, le dispositif de liaison élastique et l'armature rigide étant adaptés pour coopérer par emboîtement du dispositif de liaison élastique dans les deuxième et troisième côtés.

2. Suspente selon la revendication 1 dans laquelle le dispositif de liaison élastique (5) a une géométrie adaptée pour que la direction principale de travail (Z) corresponde à un travail en compression, respectivement en traction.

3. Suspente selon l'une des revendications précédentes dans laquelle l'armature (12) présente un logement (16) adapté pour que le dispositif de liaison élastique (5) soit emboîté au moins en partie, dans le logement dans la position retenue.

4. Suspente selon la revendication 3 dans laquelle l'armature (12) s'étend sensiblement perpendiculairement à l'axe central (X), et le dispositif de liaison élastique (5) comporte en outre une partie périphérique (9) emboîtée dans le logement (16) de l'armature et une partie de support (8) reliant la partie de liaison à la partie périphérique, ladite partie de support étant adaptée pour travailler en compression lorsque la partie de liaison est sollicitée dans la direction principale de travail, perpendiculairement à l'axe central, orientée différemment par rapport à l'armature dans chacune desdites positions relatives.

5. Suspente selon la revendication 4 dans laquelle la partie périphérique (9) du dispositif de liaison élastique (5) comporte une armature intermédiaire (9a) emboîtée dans ladite armature (12).

6. Suspente selon l'une quelconque des revendication précédentes, dans laquelle le dispositif de liaison élastique (5) n'est pas adhérisé sur l'armature (12) mais est fixé dans l'armature par simple emboîtement.

7. Procédé de montage d'une suspente (1) pour ligne d'échappement (2) de véhicule automobile pour lier entre eux une ligne d'échappement (2) et la caisse (3) d'un véhicule automobile selon l'une quelconque des revendications précédentes, comprenant au moins l'étape consistant à faire coopérer :
- un dispositif de liaison élastique (5) qui s'étend perpendiculairement à un axe central (X) et qui comporte une partie de liaison (7) destinée à être reliée à un premier élément parmi la caisse et la ligne d'échappement et présentant un logement (7a), ledit dispositif ayant une géométrie adaptée pour amortir des mouvements entre la ligne d'échappement et la caisse selon une direction principale de travail (Z) ; et
- une armature rigide (12) pour fixer le dispositif de liaison élastique à un second élément parmi la caisse et la ligne d'échappement, ladite armature rigide s'étendant perpendiculairement à l'axe central (X), et comportant un premier côté (12d) doté d'une ouverture (15) et des deuxième et troisième côtés parallèles (12a,12c) perpendiculaires audit premier côté et adjacents à ladite ouverture, chacun des deuxième et troisième côtés (12a,12c) de l'armature (12) présentant deux épaulements latéraux (14) formant un U en coupe transversale ;
le dispositif de liaison élastique et l'armature rigide étant adaptés pour coopérer par emboîtement du dispositif de liaison élastique dans les deuxième et troisième côtés de l'armature dans une position retenue parmi au moins deux positions relatives (P1,P2,P3,P4) orientées l'une par rapport à l'autre dans un plan (Y, Z) perpendiculaire à l'axe central (X) et comprenant la direction principale de travail (Z) ;
ladite étape opérant par emboîtement du dispositif de liaison élastique dans l'armature, dans une position retenue parmi au moins deux positions relatives orientées l'une par rapport à l'autre dans un plan comprenant la première direction.

8. Procédé selon la revendication 7, comprenant une étape supplémentaire de fixation de l'armature (12) au second élément ce qui bloque le dispositif de liaison élastique (5) dans l'armature.

## Claims

1. Suspension mounting (1) for an exhaust pipe of an automotive vehicle for connecting an exhaust pipe (2) and the body (3) of an automotive vehicle to one another, comprising:
- a resilient connecting device (5) which extends perpendicular to a central axis (X) and which comprises a connecting part (7) designed to be connected to a first element of the body and the exhaust pipe and having a seating (7a), said device having a geometry adapted to damp movements between the exhaust pipe and the body in a main operating direction (Z), and
- a rigid bracket (12) for securing the resilient connecting device to a second element of the body and the exhaust pipe, said rigid bracket extending perpendicular to the central axis (X) and having a first side (12d) with an opening (15) and second and third parallel sides (12a, 12c) perpendicular to said first side and adjacent to said opening, which resilient connecting device and rigid bracket are designed to co-operate by press-fitting the resilient connecting device in the second and third sides, and the resilient connecting device and the rigid bracket are designed to co-operate by means of a press fitting one inside the other in one retained position of at least two relative positions (P1, P2, P3, P4) oriented with respect to one another in a plane (Y, Z) perpendicular to the central axis (X) and including the main operating direction (Z), which suspension mounting is **characterised by** the fact that each of the second and third sides (12a, 12c) of the bracket (12) has two lateral shoulders (14) forming a U-shape in cross-section.

2. Suspension mounting as claimed in claim 1 in which the resilient connecting device (5) has an adapted geometry so that the main operating direction (Z) corresponds to operation under compression, respectively traction.

3. Suspension mounting as claimed in one of the preceding claims, in which the bracket (12) has an adapted compartment (16) so that the resilient connecting device (5) is at least partially pressed into the compartment in the retained position.

4. Suspension mounting as claimed in claim 3, in which the bracket (12) extends essentially perpendicular to the central axis (X) and the resilient connecting device (5) also has a peripheral part (9) pressed into the compartment (16) of the bracket and a support part (8) linking the connecting part to the peripheral part, said support part being adapted to work under compression when the connecting part is subjected to load in the main operating direction, perpendicular to the central axis, oriented differently with respect to the bracket in each of said relative positions.

5. Suspension mounting as claimed in claim 4, in which the peripheral part (9) of the resilient connecting device (5) has an intermediate bracket (9a) pressed into said bracket (12).

6. Suspension mounting as claimed in any one of the preceding claims, in which the resilient connecting device (5) is not adhered to the bracket (12) but is fixed in the bracket simply by press fitting.

7. Method of fitting a suspension mounting (1) for an exhaust pipe (2) of an automotive vehicle in order to connect an exhaust pipe (2) and the body (3) of an automotive vehicle to one another as claimed in any one of the preceding claims, comprising at least the step involving establishing co-operation between:
- a resilient connecting device (5) extending perpendicular to a central axis (X) and comprising a connecting part (7) designed to be connected to a first element of the body and the exhaust pipe and having a seating (7a), said device having a geometry adapted to damp movements between the exhaust pipe and the body in a main operating direction (Z); and
- a rigid bracket (12) for securing the resilient connecting device to a second element of the body and the exhaust pipe, said rigid bracket extending perpendicular to the central axis (X) and having a first side (12d) with an opening (15) and second and third parallel sides (12a, 12c) perpendicular to said first side and adjacent to said opening, each of the second and third sides (12a, 12c) of the bracket (12) having two lateral shoulders (14) forming a U-shape in cross-section;
the resilient connecting device and the rigid bracket being designed to co-operate by pressing the resilient connecting device into the second and third sides of the bracket in one retained position of at least two relative positions (P1, P2, P3, P4) oriented with respect to one another in a plane (Y, Z) perpendicular to the central axis (X) and including the main operating direction (Z);
said step comprising pressing the resilient connecting device into the bracket in one retained position of at least two relative positions oriented with respect to one another in a plane including the first direction.

8. Method as claimed in claim 7, comprising an additional step of fixing the bracket (12) to the second element, which blocks the resilient connecting device (5) in the bracket.

## Patentansprüche

1. Aufhängung (1) für Kraftfahrzeug-Abgasanlagen zum Verbinden einer Abgasanlage (2) mit der Karosserie (3) eines Kraftfahrzeugs, mit:
- einer elastischen Verbindungsvorrichtung (5), die senkrecht zur einer zentralen Achse (X) verläuft und ein Verbindungsstück (7) umfasst, das dazu bestimmt ist, mit einem ersten Element der Karosserie oder der Abgasanlage verbunden zu werden, und das eine Aufnahme (7a) aufweist, wobei eine Geometrie der Vorrichtung so ausgeführt ist, dass Bewegungen zwischen der Abgasanlage und der Karosserie in einer Hauptarbeitsrichtung (Z) gedämpft werden, und
- einem steifen Traggerüst (12) zum Befestigen der elastischen Verbindungsvorrichtung an einem zweiten Element der Karosserie oder der Abgasanlage, wobei das steife Traggerüst senkrecht zu der zentralen Achse (X) verläuft und eine mit einer Öffnung (15) versehene erste Seite (12d) und zueinander parallele zweite und dritte Seiten (12a, 12c) aufweist, die zu der ersten Seite senkrecht sind und an die Öffnung angrenzen,
wobei die elastische Verbindungsvorrichtung und das steife Traggerüst durch Ineinanderstecken in einer Position zusammenzuwirken vermögen, die aus wenigstens zwei relativen Positionen (P1, P2, P3, P4) gewählt ist, die bezüglich einander in einer zur zentralen Achse (X) senkrechten und die Hauptarbeitsrichtung (Z) umfassenden Ebene (y, z) ausgerichtet sind,
wobei die Aufhängung **dadurch gekennzeichnet ist, dass** sowohl die zweite als auch die dritte Seite (12a, 12c) des Traggerüsts (12) zwei seitliche Fortsätze (14) aufweist, die im Querschnitt ein U bilden, wobei die elastische Verbindungsvorrichtung und das steife Traggerüst durch Einstecken der elastischen Verbindungsvorrichtung in die zweite und dritte Seite miteinander zusammenzuwirken vermögen.

2. Aufhängung nach Anspruch 1,
bei der eine Geometrie der elastischen Verbindungsvorrichtung (5) so ausgeführt ist, dass die Hauptarbeitsrichtung (Z) einer Druck- bzw. Zugbeanspruchung entspricht.

3. Aufhängung nach einem der vorhergehenden Ansprüche,
bei der das Traggerüst (12) eine Aufnahme (16) aufweist, die so ausgeführt ist, dass die elastische Verbindungsvorrichtung (5) in der gewählten Position wenigstens zum Teil in die Aufnahme eingesteckt ist.

4. Aufhängung nach Anspruch 3,
bei der das Traggerüst (12) im Wesentlichen senkrecht zur zentralen Achse (X) verläuft und die elastische Verbindungsvorrichtung (5) zudem ein in die Aufnahme (16) des Traggerüsts eingestecktes Randstück (9) und ein das Verbindungsstück mit dem Randstück verbindendes Haltestück (8) umfasst, wobei das Haltestück auf Druck beansprucht zu werden vermag, wenn das Verbindungsstück senkrecht zur zentralen Achse in der Hauptarbeitsrichtung beansprucht wird, die bezüglich des Traggerüsts in jeder der relativen Positionen anders ausgerichtet ist.

5. Aufhängung nach Anspruch 4,
bei der das Randstück (9) der elastischen Verbindungsvorrichtung (5) ein in das Traggerüst (12) eingestecktes Zwischengerüst (9a) umfasst.

6. Aufhängung nach einem der vorhergehenden Ansprüche,
bei der die elastische Verbindungsvorrichtung (5) nicht auf dem Traggerüst (12) anhaftet, sondern durch einfaches Einstecken in dem Traggerüst befestigt ist.

7. Verfahren zur Montage einer Aufhängung (1) für Kraftfahrzeug-Abgasanlagen zum Verbinden einer Abgasanlage (2) mit der Karosserie (3) eines Kraftfahrzeugs nach einem der vorhergehenden Ansprüche, das wenigstens einen Schritt umfasst, bei dem miteinander zusammenwirken:
- eine elastische Verbindungsvorrichtung (5), die senkrecht zur einer zentralen Achse (X) verläuft und ein Verbindungsstück (7) umfasst, das dazu bestimmt ist, mit einem ersten Element der Karosserie oder der Abgasanlage verbunden zu werden, und das eine Aufnahme (7a) aufweist, wobei eine Geometrie der Vorrichtung so ausgeführt ist, dass Bewegungen zwischen der Abgasanlage und der Karosserie in einer Hauptarbeitsrichtung (Z) gedämpft werden, und
- ein steifes Traggerüst (12) zum Befestigen der elastischen Verbindungsvorrichtung an einem zweiten Element der Karosserie oder der Abgasanlage, wobei das steife Traggerüst senkrecht zu der zentralen Achse (X) verläuft und eine mit einer Öffnung (15) versehene erste Seite (12d) und zueinander parallele zweite und dritte Seiten (12a, 12c) aufweist, die zu der ersten Seite senkrecht sind und an die Öffnung angrenzen, wobei sowohl die zweite als auch die dritte Seite (12a, 12c) des Traggerüsts (12) zwei seitliche Fortsätze (14) aufweist, die im Querschnitt ein U bilden;
wobei die elastische Verbindungsvorrichtung und das steife Traggerüst durch Einstecken der elastischen Verbindungsvorrichtung in die zweite und dritte Seite des Traggerüsts in einer Position zusammenzuwirken vermögen, die aus wenigstens zwei relativen Position (P1, P2, P3, P4) gewählt ist, die bezüglich einander in einer Ebene (Y, Z) ausgerichtet sind, die senkrecht zur zentralen Achse (X) verläuft und die Hauptarbeitsrichtung (Z) umfasst;
wobei dieser Schritt durch Einstecken der elastischen Verbindungsvorrichtung in das Traggerüst in einer Position ausgeführt wird, die aus wenigstens zwei relativen Positionen gewählt ist, die bezüglich einander in einer die erste Richtung umfassenden Ebene ausgerichtet sind.

8. Verfahren nach Anspruch 7,
das einen zusätzlichen Schritt des Befestigens des Traggerüsts (12) an dem zweiten Element umfasst, wodurch die elastische Verbindungsvorrichtung (5) in dem Traggerüst festgeklemmt wird.
